# FASCICULE DE BREVET EUROPEEN

(11) **EP 1 724 593 B1**
(45) Date de publication et mention de la délivrance du brevet: **05.03.2008**
(21) Numéro de dépôt: 06290688.8
(22) Date de dépôt: 28.04.2006
(51) Int. Cl.: G01P 15/00

(54) **Système de mesure d'acceleration à cellules thermiques**
System zur Beschleunigungsmessung mit Wärmezellen
Acceleration measuring system using thermal cells

(30) Priorité: 17.05.2005 FR 0504913
(43) Date de publication de la demande: 22.11.2006
(73) Titulaire: SAGEM Défense Sécurité, 75015 Paris (FR)
(72) Inventeur: Dido, Jerôme, 75014 Paris (FR); Loisel, Pierre, 95800 Courdimanche (FR); Renault, Alain, 95300 Pontoise (FR); Combette, Philippe, 34170 Castelnau le Lez (FR); Courteaud Johann, 97419 La Possession (FR); Giani Alain, 34920 Le Cres (FR)
(74) Mandataire: Fruchard, Guy

(56) Documents cités:
- US-A- 4 611 491
- US-A- 5 581 034
- MAILLY F ET AL: "Micromachined thermal accelerometer" SENSORS AND ACTUATORS A, ELSEVIER SEQUOIA S.A., LAUSANNE, CH, vol. 103, no. 3, 15 février 2003 (2003-02-15), pages 359-363, XP004406059 ISSN: 0924-4247

## Description

On connaît, notamment du document US-A-5 581 034 un accéléromètre thermique comportant une enceinte remplie de gaz dans laquelle sont disposés un brin de chauffage central de part et d'autre duquel s'étendent des brins de détection ayant une résistivité sensible à la température. Les brins de détection sont montés en pont de Wheastone avec des résistances fixes. Le pont de Wheastone est relié à un circuit de mesure fournissant un signal électrique représentatif d'un écart de température entre les brins de détection. L'écart de température est lui-même représentatif de l'accélération à laquelle l'accéléromètre est soumis.

Les caractéristiques de mesure des accéléromètres de ce type dépendent notamment de la nature du gaz utilisé pour remplir l'enceinte. En particulier un accéléromètre thermique ayant une enceinte remplie de gaz lourd a une forte sensibilité mais une faible bande passante (typiquement 10Hz) tandis qu'un accéléromètre thermique dont l'enceinte est remplie d'un gaz léger a une sensibilité plus faible mais une bande passante beaucoup plus élevée (typiquement 100Hz).

Dans les systèmes de mesure actuels il est donc nécessaire de réaliser un compromis entre la sensibilité et la bande passante de l'accéléromètre utilisé.

### OBJET DE L'INVENTION

Un but de l'invention est de proposer un système de mesure d'accélération à cellules thermiques présentant à la fois une bonne sensibilité et une bande passante élevée.

### RESUME DE L'INVENTION

Selon l'invention on propose un système de mesure d'accélération comportant deux cellules thermiques qui ont des caractéristiques différentes l'une de l'autre, et qui sont montées pour délivrer des signaux d'entrée à une boucle d'asservissement comprenant un amplificateur ayant un gain variable en fonction d'une fréquence des signaux d'entrée.

De préférence le système de mesure d'accélération comporte une première cellule optimisée en sensibilité reliée à une entrée positive d'un soustracteur en amont de l'amplificateur, et une seconde cellule optimisée en bande passante reliée à un additionneur en aval de l'amplificateur.

Ainsi l'erreur résultant de l'imprécision à une fréquence élevée de la cellule optimisée en sensibilité est corrigée par le signal provenant de la cellule à forte bande passante tandis qu'à basse fréquence l'erreur du signal optimisé en bande passante est corrigée par le signal optimisé en sensibilité, de sorte que le signal obtenu à la sortie de la boucle d'asservissement est un signal optimisé à la fois en sensibilité et en bande passante.

### BREVE DESCRIPTION DES DESSINS

D'autres caractéristiques et avantages de l'invention apparaîtront à la lecture qui suit d'un mode de réalisation particulier non limitatif de l'invention en relation avec les figures ci-jointes parmi lesquelles :
- La figure 1 est une représentation schématique du système de mesure selon l'invention.
- La figure 2 est une illustration d'une courbe de gain préférée pour la mise en oeuvre du système de mesure selon l'invention.

### DESCRIPTION DETAILLEE DE L'INVENTION

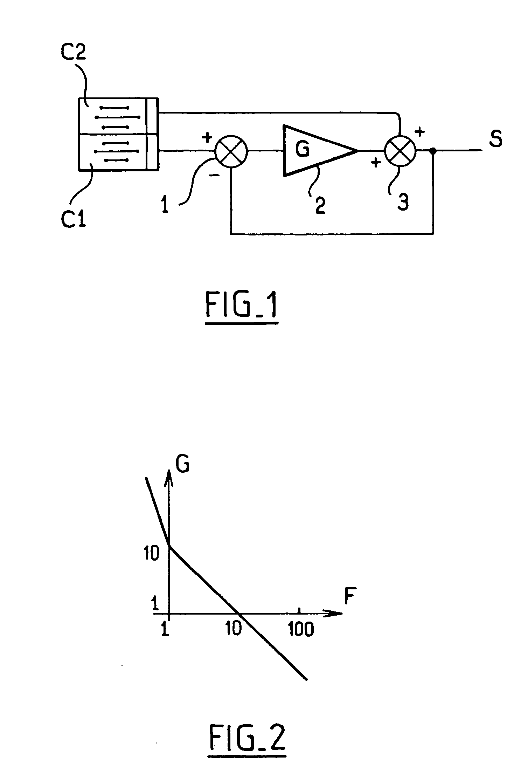

En référence à la figure 1, le système de mesure d'accélération selon l'invention comporte une première cellule C1 optimisée en sensibilité, par exemple une cellule ayant une enceinte remplie de gaz carbonique de sorte que la cellule à une forte sensibilité mais une bande passante limitée à 10Hz, et une seconde cellule C2 optimisée en bande passante, par exemple une cellule dont l'enceinte est remplie d'hélium et dont la bande passante atteint une fréquence de 100Hz. La première cellule C1 délivre un signal de mesure qui est appliqué à l'entrée directe d'un soustracteur 1 dont la sortie est reliée à un amplificateur 2 ayant un gain G variable en fonction d'une fréquence F du signal d'entrée. La sortie de l'amplificateur 2 est reliée à l'une des entrées d'un additionneur 3 dont la deuxième entrée reçoit le signal de mesure délivré par la seconde cellule C2. La sortie de l'additionneur 3 est reliée à l'entrée inverseuse du soustracteur 1 pour former une boucle d'asservissement qui délivre un signal de sortie S.

En référence à la figure 2 qui illustre le gain de l'amplificateur 2 en fonction de la fréquence du signal d'entrée en utilisant des échelles logarithmiques, ce gain G est de préférence linéaire avec une pente de -1 pour des fréquences supérieures à 1Hz et une pente de -2 pour des fréquences inférieures à 1Hz afin de minimiser l'erreur de zéro pour les faibles fréquences. Pour une bonne stabilité de la boucle d'asservissement, le gain a en outre une valeur de 1 pour une fréquence de 10Hz égale à la fréquence maximale de la première cellule C1 optimisée en sensibilité.

L'invention n'est pas limitée au mode de réalisation décrit et on peut y apporter des variantes de réalisation sans sortir du cadre de l'invention tel que défini par les revendications. En particulier bien que le système de mesure d'accélération ait été illustré avec deux cellules seulement on peut réaliser un système de mesure avec des cellules optimisées selon d'autres caractéristiques que celles décrites et réaliser des asservissements en cascade en fonction des performances recherchées pour le système. On peut également utiliser plusieurs boucles d'asservissement identiques pour assurer une redondance de la mesure en particulier dans le cas de munitions guidées qui sont stockées pendant une période de temps prolongée puis mises en oeuvre sans contrôle poussé du système de mesure d'accélération.

Bien que l'invention ait été décrite en relation avec un amplificateur ayant un gain variable linéaire, on peut utiliser un amplificateur dont le gain n'est pas linéaire, le gain étant toutefois de préférence globalement décroissant en fonction de la fréquence du signal d'entrée.

## Revendications

1. Système de mesure d'accélération **caractérisé en ce qu'**il comporte une première cellule (C1) optimisée en sensibilité et une seconde cellule (C2) optimisée en bande passante qui sont montées pour délivrer des signaux d'entrée à une boucle d'asservissement comprenant un amplificateur (2) ayant un gain (G) variable en fonction d'une fréquence des signaux d'entrée.

2. Système de mesure d'accélération selon la revendication 1 **caractérisé en ce que** le gain (G) est décroissant en fonction de la fréquence du signal d'entrée.

3. Système de mesure d'accélération selon la revendication 2, **caractérisé en ce que** le gain (G) a une valeur de 1 pour une fréquence maximale de la cellule (C1) optimisée en sensibilité.

4. Système de mesure d'accélération selon la revendication 1 **caractérisé en ce que** le gain (G) est linéaire avec une pente de -1 pour des fréquences supérieures à 1Hz.

5. Système de mesure d'accélération selon la revendication 4 **caractérisé en ce que** la pente est de -2 pour une fréquence inférieure à 1Hz.

6. Système de mesure d'accélération selon la revendication 1 **caractérisé en ce que** la cellule (C1) optimisée en sensibilité est reliée à une entrée directe d'un soustracteur (1) en amont de l'amplificateur (2) et la cellule (C2) optimisée en bande passante est reliée à un additionneur (3) en aval de l'amplificateur, l'entrée inverse du soustracteur (1) étant reliée à la sortie de l'additionneur (3).

## Claims

1. A corrugated tube comprising a corrugated end which has corrugations (2) following one another at a predetermined pitch (p) and possessing a minimum inside diameter (d1) and a maximum inside diameter (d2), and which is provided with a coupling endpiece, **characterized in that** the endpiece is constituted by a tubular body (10) possessing a first zone (11) provided on the outside with at least two annular barbs (14) of the Christmas-tree type that are spaced apart by a distance (L1) corresponding to the pitch of the corrugations of the tube and having a maximum diameter (D2) greater than the maximum inside diameter of the tube, the first zone presenting between the barbs a minimum diameter greater than the minimum inside diameter of the tube, and **in that** the body has a second zone (17) extending immediately behind the barbs to receive at least one end corrugation (3) of the tube and having an outside diameter (D3) less than a diameter (D1) of a junction zone between two annular barbs.

2. A tube according to claim 1, **characterized in that** the outside diameter (D3) of the second zone (17) is close to the minimum inside diameter (d1) of the tube (1).

3. A tube according to claim 1, **characterized in that** the distance (L1) between the annular barbs (14) is equal to the pitch (p) of the corrugations (2).

4. A tube according to claim 1, **characterized in that** the distance (L1) between the annular barbs (14) is equal to a multiple of the pitch (p) of the corrugations (2).

5. A tube according to claim 1, **characterized in that** the maximum diameter (D2) of the annular barbs (14) is determined so as to cause the tube (1) to expand by 30% to 40%.

6. A corrugated tube (1) having a corrugated end provided with a coupling device, the tube being **characterized in that** the coupling device is constituted by an endpiece according to any preceding claim.

## Patentansprüche

1. System zur Beschleunigungsmessung, **dadurch gekennzeichnet, dass** es eine erste Zelle (C1) umfasst, die hinsichtlich der Empfindlichkeit optimiert ist, sowie eine zweite Zelle (C2), die hinsichtlich der Bandbreite optimiert ist, und die so angebracht sind, dass sie Eingangssignale an einen Regelkreis liefern, der einen Verstärker (2) umfasst, der einen Verstärkungsfaktor (G) hat, der in Abhängigkeit von einer Frequenz der Eingangssignale variabel ist.

2. System zur Beschleunigungsmessung nach Anspruch 1, **dadurch gekennzeichnet, dass** der Verstärkungsfaktor (G) in Abhängigkeit von der Frequenz des Eingangssignals abnimmt.

3. System zur Beschleunigungsmessung nach Anspruch 2, **dadurch gekennzeichnet, dass** der Verstärkungsfaktor (G) einen Wert von 1 bei einer maximalen Frequenz der Zelle (C1) hat, die hinsichtlich ihrer Empfindlichkeit optimiert ist.

4. System zur Beschleunigungsmessung nach Anspruch 1, **dadurch gekennzeichnet, dass** der Verstärkungsfaktor (G) bei Frequenzen über 1 Hz linear mit einer Steigung von -1 ist.

5. System zur Beschleunigungsmessung nach Anspruch 4, **dadurch gekennzeichnet, dass** bei einer Frequenz unter 1 Hz die Steigung -2 beträgt.

6. System zur Beschleunigungsmessung nach Anspruch 1, **dadurch gekennzeichnet, dass** die Zelle (C1), die hinsichtlich ihrer Empfindlichkeit optimiert ist, mit einem direkten Eingang eines stromaufwärts des Verstärkers (2) vorhandenen Subtrahierers (1) verbunden ist und die Zelle (C2), die hinsichtlich der Bandbreite optimiert ist, mit einem stromabwärts des Verstärkers vorhandenen Addierer (3) verbunden ist, wobei der invertierte Eingang des Subtrahierers (1) mit dem Ausgang des Addierers (3) verbunden ist.
